# EUROPEAN PATENT SPECIFICATION

(11) **EP 3 487 693 B1**
(45) Date of publication and mention of the grant of the patent: **13.05.2020**
(21) Application number: 17742556.8
(22) Date of filing: 29.06.2017
(51) Int. Cl.: B29D 30/28

(54) **METHOD AND APPARATUS FOR BUILDING TYRES FOR VEHICLE WHEELS**
VERFAHREN UND VORRICHTUNG ZUR HERSTELLUNG VON REIFEN FÜR FAHRZEUGRÄDER
PROCÉDÉ ET APPAREIL DE FABRICATION DE PNEUMATIQUES DESTINÉS À DES ROUES DE VÉHICULE

(30) Priority: 22.07.2016 IT 201600077050
(43) Date of publication of application: 29.05.2019
(73) Proprietor: Pirelli Tyre S.p.A., 20126 Milano (IT)
(72) Inventor: IL GRANDE, Nicola, 10036 Settimo Torinese (Torino) (IT); GIOVANNINI, Gianluca, 10036 Settimo Torinese (Torino) (IT); VECCHIATO, Giancarlo, 20126 Milano (IT)
(74) Representative: Tansini, Elio Fabrizio
(86) International application number: PCT/IB2017/053899
(87) International publication number: WO 2018/015825

(56) References cited:
- EP-A1- 2 286 986
- GB-A- 1 126 015
- US-A- 1 179 528
- US-A- 3 687 781
- US-A- 3 944 458
- US-A- 4 790 899
- US-A1- 2006 048 884
- US-A1- 2007 079 921
- US-A1- 2009 188 607

## Description

The present invention relates to a method for building tyres for vehicle wheels. The invention further relates to an apparatus for building tyres for vehicle wheels, usable for implementing said method.

A tyre for vehicle wheels generally comprises a carcass structure comprising at least one carcass ply having respectively opposite end flaps engaged with respective annular anchoring structures, integrated in the areas usually identified by the name of "beads". A belt structure is associated to the carcass structure, comprising one or more belt layers, arranged in radial superposition with respect to each other and with respect to the carcass ply, having textile or metallic reinforcing cords with crossed orientation and/or substantially parallel to the circumferential development direction of the tyre.

A tread band is applied in a position radially outer to the belt structure, made of elastomeric material like other semi-finished products making up the tyre.

Respective sidewalls of elastomeric material are further applied in an axially outer position on the lateral surfaces of the carcass structure, each extending from one of the lateral edges of the tread band up at the respective annular anchoring structure to the beads.

After the building of the green tyre carried out by assembling respective semi-finished products, a moulding and vulcanisation treatment is generally carried out in order to determine the structural stabilisation of the tyre through cross-linking of the elastomeric material, as well as to impart a desired tread pattern on the tread band and to impart any distinguishing graphic signs at the sidewalls. To this end, the tyre is introduced into a mould to be vulcanised with a combined heating and pressing action, for example obtained by introducing steam under pressure into an expandable chamber engaged within the tyre itself.

The term "elastomeric material" is used to designate a composition comprising at least one elastomeric polymer and at least one reinforcement filler. Preferably, such composition further comprises additives such as cross-linking agents and/or plasticisers. Due to the presence of the cross-linking agents, such material can be cross-linked by heating so as to form the final manufactured article.

By "elementary semi-finished product" of the tyre in this context it is meant an elongated element (dispensed both in circumferential and in transverse direction by a coil, or an extruder or otherwise formed for use) of elastomeric material alone, or comprising further structural elements, such as at least a textile or metallic reinforcing cords, or at least two cords, preferably parallel to each other, each cord developing preferably in the longitudinal direction of said elongated element.

"Strip-like element" means the above elongated element cut to size having a cross-sectional profile with flattened shape and comprising one or more textile and/or metallic cords extending parallel to the longitudinal development of the strip-like element itself and embedded in or at least partially coated with at least one layer of elastomeric material. A strip-like element can approximately have a transverse dimension of from about 1 mm to about 80 mm.

By the term "coiling" it is meant an operation of winding a continuous elongated element in a substantially circumferential direction about a geometric axis, so as to form mutually side by side coils, and optionally in partial mutual overlapping, to form at least one substantially continuous layer.

By "H/C section ratio" of a tire it is meant the ratio between the section height H, measured in a radial section (section of the tyre containing the axis of rotation thereof) between the radially outermost point of the tread band, and the radially innermost point of the bead, and the section width C, measured axially, in the same radial section, in the maximum chord point of the tyre. Document WO 01/38077, on behalf of the same Applicant, describes a method and an apparatus for producing a belt structure of a tyre for vehicle wheels. The belt structure is built with strip-like elements deposited in circumferential sequence and in mutual approach relation on a toroidal support. The apparatus is provided with a deposition unit comprising two pressure elements, each carried by a movable support member along a guide structure, on the action of cross handling devices, along a substantially axial direction of the toroidal support. Each pressure element is movable along the strip-like element, in contrast relation against the radially outer surface of the toroidal support. Each support element is further preferably engaged with at least one auxiliary retention element which is suitable for cooperating with the respective pressure element to retain the strip-like element in the instants between the cutting of the latter from a continuous tape and the application on the toroidal support.

The movement of the support elements away from each other results in the simultaneous translation of the pressure elements along the strip-like element away from the equatorial plane, so as to cause the strip-like element itself to be applied throughout the length thereof on the toroidal support, with a pressing action extending progressively towards the opposite ends of the strip-like element starting from the central portion.

Document WO 2009/068939, on behalf of the same Applicant, describes a process in which the carcass structure is made by depositing strip-like elements in mutual circumferential approach on a building drum. The strip-like elements are deposited by a deposition unit which is suitable for sequentially engaging each of the strip-like elements and cause the application thereof on the radially outer deposition surface of the building drum. A feeding unit comprises a cutting member arranged to cut a continuous elongated element to obtain the single strip-like elements. The apparatus described in WO 2009/068939 further comprises an auxiliary adjusting device capable of moving the deposition unit around a respective substantially radial correction axis with respect to the geometrical rotational axis of the building drum. The function of the auxiliary adjusting device is to deposit the strip-like elements on the building drum at any angle with respect to the circumferential development thereof, so as to build carcass plies in which the cords that form part thereof have, with respect to a longitudinal development direction of the ply, that is, with respect to a circumferential direction of the tyre to be built, a "ply angle" other than 90°.

Document WO 2011/045688, also on behalf of the same Applicant, describes a process and an apparatus for building tyres for vehicle wheels in which at least one tyre component, such as a carcass ply, is assembled by the deposition of strip-like elements circumferentially side by side on a radially outer deposition surface of the forming drum. For deposition purposes, each strip-like element is radially approached to the deposition surface and locked in a central portion thereof against the deposition surface. The strip-like element is pulled in opposite directions starting from the central portion towards the opposite ends thereof while the central portion is kept locked against the deposition surface, so as to progressively lay the strip-like element against the deposition surface.

EP 2286986 provides a pressure roller assembly comprising an axially segmented roller fitted on a tubular elastic support. The roller assembly is used for pressing the overlapped portion of a raw rubber component obtained by winding a rubber strip around a drum.

US 2009-188607 aims to perform a lamination without the generation of voids in building a tire comprising rubber members formed with a spirally wound rubber strip. The arrangement uses holding rolls and two sets of stitching rolls arranged in parallel with a center or a rubber strip width therebetween, to enable an independent pressing motion such that the rubber strip is pressed and bonded by the holding rolls in a position, in which the rubber strip is wound. The holding rolls and stitching rolls are made of an elastic body, such as rubber and poly-urethane, having a moderate elasticity suited to press.

US 2006-0048884 aims for achieving reliable pressing for bonding between a plurality of tire members all over outer face of the tire members, without forming a void between them. One or more of the tire members are laid on a building drum, then a press-contact part of a stitcher device is pressed on the tire members on the building drum while the building drum being rotated. The press-contact part is a pneumatic-tire roller maintained with a certain level of inner pressure.

US 2007-0079921 discloses a stitcher for stitching a helical splice having an angle on material mounted on a drum. While the drum is rotated at a constant speed, a stitcher assembly is moved transversally at a constant velocity coordinated with the drum speed so that the stitcher engages the ply along the helical splice. The stitcher has a roller rotatably mounted to a support frame. The roller also can pivot about a longitudinal axis of the support frame. The outer surface of the roller may comprise a rubber or elastomeric material.

The Applicant has noted that the qualitative features of the tyres obtained, for example as described in any of the above documents, are in some cases lower than expected, despite the observance of complex production protocols.

The Applicant has also noted that each of the following circumstances leads to a particularly evident manifestation of the problem introduced above:
- a reduction in the vulcanisation time, which may be desired in the production process to achieve a reduction in production costs and an increase in productivity;
- an increase in the tension to which the carcass structure and belt structure are subjected during the vulcanisation, generally desired when increasing the "handling" performance of the tyres, i.e. their readiness to respond to the steering commands of the vehicle;
- a reduction in the H/C section ratio (for example less than 0.5) of the tyre, typically used in the manufacture of tyres for high performance vehicles.

In seeking a possible explanation of the relation between the circumstances described above, the Applicant has come to the conclusion that the cause of the above-mentioned problems is determined by the inclusion of air bubbles inside the tyre structure, sometimes visible externally and large sized, and very often small in size, therefore not visible.

The Applicant in fact believes that such air bubbles, though small in size and therefore not detectable by the usual control systems, constitute structural discontinuities at which overheating, early wear and/or separation of the internal components of the tyre may be triggered.

The Applicant has therefore observed that with a reduction in the vulcanisation time and consequently with the use of higher mould temperatures which require a rapid consolidation of the molecular structure of the elastomers, the expulsion of small amounts of air is hindered, which would otherwise have more time to permeate through the elastomer not yet cross-linked in a less rapid-curing vulcanisation process. In addition, a high tensioning of the carcass and/or belt structures during the vulcanisation, obtainable by studying appropriate geometries of the mould and of the green tyre, partially contrasts the vapour pressure and therefore tends to reduce the tyre pressing force against the walls of the mould, thereby limiting the expulsion of air as a result of such pressing. The Applicant has also noted that a low H/C section ratio of the tyre limits the deformations imposed on the carcass structure during the shaping carried out for the coupling thereof with the belt structure, so as not to favour the expulsion of any air bubbles trapped between liner and carcass ply or plies.

The Applicant has therefore perceived that by taking appropriate measures to minimise the inclusion of air particles during the building of the tyre, and in particular during the building of the carcass ply or plies and/or the belt layers, it is possible to achieve significant improvements in qualitative terms on the final product, as well as in terms of productivity.

More specifically, the Applicant has finally found that the inclusion of air particles between the deposition surface and the individual strip-like elements can be effectively reduced with the aid, for the deposition of strip-like elements, of a pressure roller elastically deformable under the thrust exerted against the forming drum, so as to adapt the shape thereof to that of the deposition surface itself.

More in particular, according to a first aspect thereof, the invention relates to a method for building tyres for vehicle wheels, according to claim 1.

According to a second aspect thereof, the invention relates to an apparatus for building tyres for vehicle wheels, according to claim 7.

The Applicant considers that the use of a flexible roller allows for greater uniformity of application of the strip-like element according to the entire surface extension thereof, so as to significantly reduce or eliminate the amount of air bubbles undesirably trapped between the radially inner surface of the strip-like element and the adjacent deposition surface. The flexibility of the pressure roller also allows following the shape of the deposition surface also by operating on forming drums of different sizes and/or according to different deposition angles of the strip-like elements. Thanks to a more uniform application of the single strip-like elements, it is also possible to use larger strip-like elements to reduce the number and time required for their application according to the entire circumferential development of the forming drum.

In at least one of the above aspects, the present invention further has one or more of the following preferred features.

Preferably, the pressure roller is movable radially to the forming drum toward a deposition condition in which said pressure roller operates in thrust relationship against the forming drum.

Preferably, before reaching the deposition condition, the pressure roller goes beyond a transient condition in which the strip-like element is at least partly in contact along a median longitudinal line thereof with said pressure roller and said deposition surface, while respectively opposite longitudinal edges of the strip-like element are spaced apart from the pressure roller and/or from the deposition surface.

Preferably, during the deposition the pressure roller is subjected to an elastic bending deformation along an axis of rotation thereof.

Preferably, during the deposition the pressure roller maintains an axial dimension thereof substantially constant along the contact area.

Friction or other abnormal stresses are thus countered, which can cause wrinkles or surface damage on the strip-like element.

Preferably, at least one of said strip-like elements is deposited with a longitudinal edge thereof radially superimposed on the longitudinal edge of a previously deposited strip-like element, at an overlapping zone subjected to the action of the pressure roller.

Preferably, the pressure roller has axial portions elastically movable relative to one another radially to the axis of rotation of the roller.

The mobility of the axial portions allows the pressure roller to adapt to the shape of the deposition surface while also following the thickness variations of the article in the junction areas.

Preferably, during the deposition the pressure roller maintains a circular development in cross section at the contact area.

An adaptability of the pressure roller is thus promoted, so that the thrust exerted on the strip-like element by said roller is always substantially orthogonal to the deposition surface.

Preferably, the pressure roller is radially movable with respect to the forming drum against the action of elastic thrust members.

Preferably, the pressure roller is elastically deformable by bending along an axis of rotation thereof.

Preferably, the flexibility of the pressure roller along the axis of rotation thereof is such as to produce a bending deformation camber at least equal to 2^{∗}10⁻⁵ m/N, more preferably at least equal to 5^{∗}10⁻⁵ m/N.

Thus, a sufficient adaptability of the pressure roller to the shape of the deposition surface is achieved.

Preferably, said pressure roller is substantially incompressible in an axial direction, parallel to the axis of rotation thereof.

Preferably, said pressure roller comprises a helical spring having coils consecutively side by side along said axis of rotation.

Preferably, said coils are arranged one against the other at least in said loading condition.

Preferably, in the deposition condition, said coils are arranged one against the other in a circumferential portion of the pressure roller radially in contact with the strip-like element.

Preferably, said oscillation axis is substantially orthogonal to a lying plane of the axis of rotation of the pressure roller.

Preferably, said oscillation axis is substantially tangent to a circumference concentric to a geometric axis of the forming drum.

Preferably, elastic balancing members are provided, operating on the support bracket to maintain the pressure roller in an intermediate orientation between two extreme oscillation positions.

Preferably, axially opposite ends of said helical spring are axially fitted on respective bushes rotatably engaged to a support bracket.

Preferably, the pressure roller is operatively carried by a support element on which said radial handling devices operate.

Preferably, elastic thrust members are provided for elastically pushing, in the deposition condition, the pressure roller towards the deposition surface.

Preferably, said support bracket is constrained to the support element in a pivotable manner about said oscillation axis.

Further features and advantages will become more apparent from the detailed description of a preferred but non-exclusive embodiment of a method and an apparatus for building tyres for vehicle wheels according to the present invention.

Such description is given hereinafter with reference to the accompanying drawings, provided only for illustrative and, therefore, non-limiting purposes, in which:
- figure 1 schematically shows a top view of an apparatus for building tyres for vehicle wheels made according to the present invention;
- figure 2 schematically shows a perspective view of a forming drum engaged in a strip-like element deposition station;
- figure 3 schematically shows a deposition unit seen according to trace III-III in figure 2, in a transient condition between a loading condition and a deposition condition;
- figure 4 shows the deposition unit in figure 3 in the deposition condition;
- figure 5 shows a broken diametrical section of a tyre that can be built with the subject method and apparatus.

With reference to the above figures, reference numeral 1 identifies as a whole an apparatus for building tyres for vehicle wheels designed to implement a method according to the present invention.

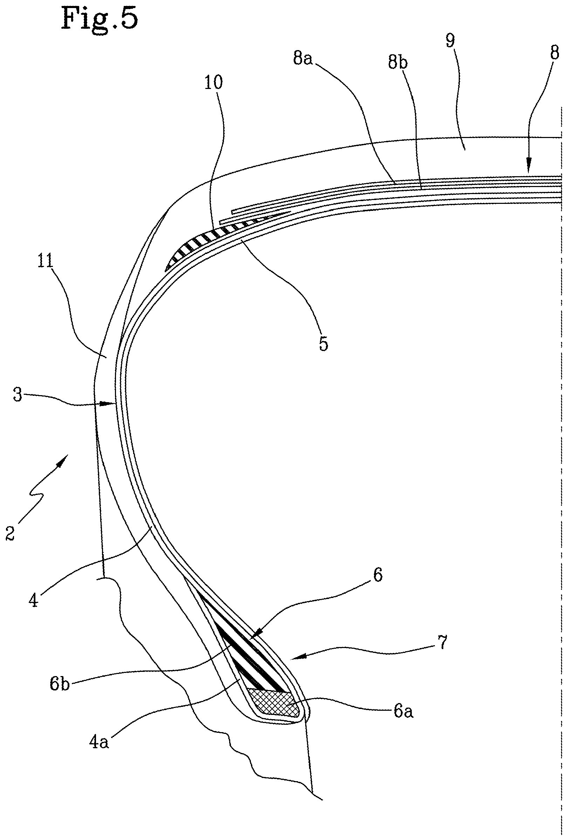

Apparatus 1 is designed to build tyres 2 (figure 5) essentially comprising at least one carcass structure 3 having at least one carcass ply 4. An airtight layer of elastomeric material or so-called liner 5 may be applied internally to the carcass ply/plies 4. Two annular anchoring structures 6 comprising each a so-called bead core 6a bearing an elastomeric filler 6b in radially outer position are engaged to respective end flaps 4a of the carcass ply or plies 4. The annular anchoring structures 6 are integrated in the proximity of zones usually identified by the name of "beads" 7, at which the engagement between tyre 2 and a respective mounting rim usually occurs.

A belt structure 8 comprising one or more belt layers 8a, 8b is circumferentially applied around the carcass ply/plies 4, and a tread band 9 is circumferentially superimposed on the belt structure 8.

The belt structure 8 may be associated with so-called "under-belt inserts" 10 placed each between the carcass ply/plies 4 and one of the axially opposite end edges of the belt structure 8. In addition or alternatively to the under-belt inserts 10, annular inserts (not shown) made of elastomeric material and/or comprising textile or metal cords substantially parallel to the circumferential development direction of the tyre (belt layer at 0 degrees) or other reinforcing elements may be radially superimposed at least to the axially opposite end edges of the belt layers 8a, 8b, and/or interposed between the same belt layers 8a, 8b, at least at said end edges.

Two sidewalls 11, extending each from the respective bead 7 to a corresponding lateral edge of the tread band 9, are applied in laterally opposite positions on the carcass ply/plies 4.

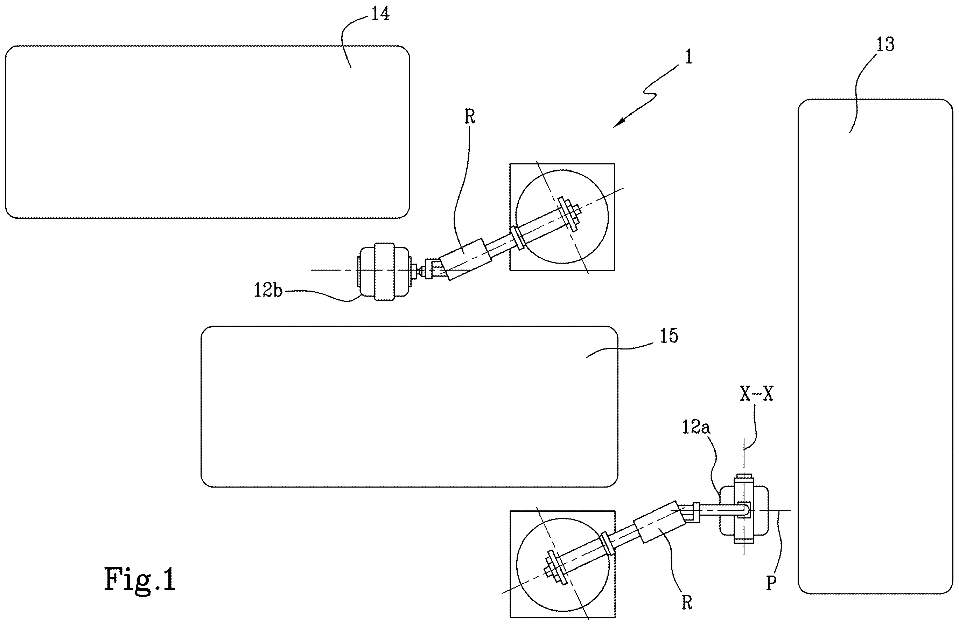

Said components of tyre 2 are built on one or more forming drums 12a, 12b by moving said forming drums, preferably by means of one or more robotised arms "R" of the anthropomorphic type, preferably with at least 6 rotation axes (figure 1), between different work stations at each of which special devices preferably apply elementary semi-finished products on the forming drum or drums 12a, 12b.

In a preferred embodiment, schematically illustrated by way of example in figure 1, apparatus 1 comprises a carcass building line 13, an outer sleeve building line 14, and a shaping station 15. In the carcass building line 13, one or more first forming drums 12a are sequentially moved between different work stations arranged to form, on each forming drum 12a, a carcass sleeve comprising the carcass ply or plies 4, liner 5, the annular anchoring structures 6 and optionally at least part of sidewalls 11. Each of the first forming drums 12a used along the carcass building line 13 may be represented by a so-called "building drum" of the "first-stage" type or "unistage" type, on which the carcass structure 3 is built and/or assembled.

At the same time, in the outer sleeve building line 14, one or more second forming drums 12b are sequentially moved between different work stations designed to form an outer sleeve on each of them, comprising at least the belt structure 8, the tread band 9, and optionally the under-belt inserts 10 and/or at least part of sidewalls 11. Each of the second forming drums 12b used along the outer sleeve building line 14 may for example be represented by a so-called "auxiliary drum".

In the shaping station 15, the outer sleeve is removed from the second forming drum 12b to be coupled to the carcass structure 3, previously formed along the carcass building line 13, by the toroidal shape of the latter.

The built tyres 2 are then sequentially transferred to at least one vulcanisation unit, not shown.

According to the present invention, it is contemplated that at least one of the components of tyre 2, for example at least one carcass ply 4 and/or at least one belt layer 8a, 8b, is formed on the respective forming drum 12a, 12b by deposition of elementary semi-finished products in the shape of strip-like elements "B" parallel side by side to each other and arranged one after the other on a deposition surface "S", extending along a circumferential development direction of the forming drum itself, in a radially outer position to the latter.

Preferably, each strip-like element "B" has a transverse dimension approximately of from about 2 mm to about 50 mm, for example between about 20 mm and about 40 mm.

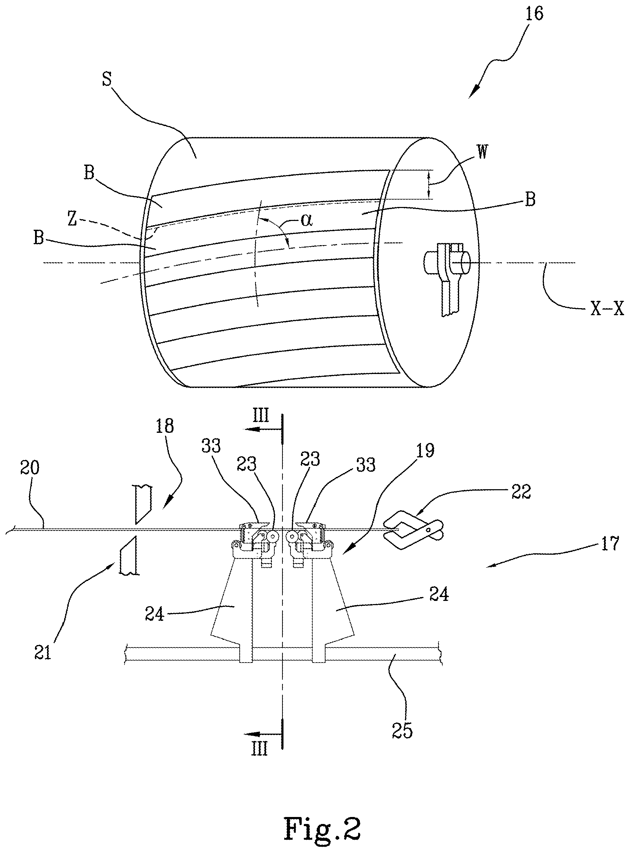

In the example shown herein, with particular reference to figures 2 to 4, a first forming drum 12a used for building the carcass structure 3 is operatively engaged in a strip-like element deposition station 16 arranged along the carcass building line 13, for forming the carcass ply 4 on the deposition surface "S" provided by the forming drum itself.

The strip-like element deposition station 16 comprises at least one assembling device 17 configured to deposit the strip-like elements "B" in relation of mutual circumferential approach on the forming drum 12a. On occurrence, two or more diametrically opposite assembling devices 17 or differently distributed around a geometrical axis "X-X" of the forming drum 12a may be provided.

It should be noted that said deposition surface "S" may be the radially outer surface of the forming drum 12a or, preferably, the radially outer surface provided by liner 5 and/or any other components of tyre 2 already deposited on said forming drum 12a.

Preferably, the forming drum 12a is positioned and rotatably supported around its geometric axis "X-X". Devices not shown, for example in the shape of a spindle driven by a motor, serve to rotate the forming drum 12a around said geometric axis "X-X". More in particular, the forming drum 12a may be rotated according to angular rotation steps. At each stop between two subsequent angular steps, the assembling device 17 applies a strip-like element "B". The width of the angular rotation steps can be selected so that, depending on the construction requirements, the strip-like elements "B" are slightly spaced, or mutually in contact with each other, so as to form the carcass ply 4 or other component having a substantially continuous and homogeneous circumferential development around the geometric axis "X-X" of the forming drum 12a. More in particular, it is preferable that at least in making the carcass ply 4, one or more of the strip-like elements are deposited each with a longitudinal edge thereof radially superimposed on the longitudinal edge of a previously deposited strip-like element, at an overlapping zone "Z".

It may also be contemplated that the forming drum 12a and the assembling device 17 may be angularly oriented with respect to each other, for example around an orientation axis preferably lying in a transversal symmetry plane "P" of the drum itself. It is thus possible to modify, depending on the construction requirements, a deposition angle "α" of the strip-like elements "B" with respect to the circumferential development direction of the forming drum 12a. In order to make a carcass 4, such deposition angle "α" may be, for example, of between about 70° and about 100°. In order to make a belt layer 4, such deposition angle "α" may be, for example, of between about 45° and about 60°.

The assembling device 17 comprises at least one feeding unit 18 designed to feed, preferably one at a time, the strip-like elements "B" cut according to a predetermined length to a deposition unit 19.

The strip-like elements "B" are preferably obtained by cutting operations sequentially carried out on at least one continuous elongated element 20 coming from a drawing and/or calendaring device, or from a feeding coil, and therefore have all the same width "W". Preferably, such a width "W" is comprised between about 20 mm and about 40 mm.

The continuous elongated element 20, and consequently the strip-like elements "B" obtained therefrom, have a plurality of cords or similar thread-like elements of a metallic or textile material extending parallel to each other along the longitudinal development of the elongated element and of the strip-like element "B" itself, and at least partially coated by a layer of elastomeric material applied through a drawing and/or calendaring operation.

The feeding unit 18 may be, for example, of the type described in US 8,342,220 B2 on behalf of the same Applicant. In particular, the feeding unit 18 comprises at least one cutting member 21 arranged to cut the continuous elongated element 20 perpendicularly or according to a predetermined inclination with respect to the longitudinal development thereof, to obtain the single strip-like elements "B". The cutting member 21 is associated with at least one gripping member 22 movable between a first working position, in which it is designed to engage a terminal end of the continuous elongated element 20 close to the cutting member 21, and a second working position in which it is removed from the cutting member itself.

Following the translation from the first to the second working position, the gripping member 22 pulls the continuous elongated element 20 so as to extend it beyond the cutting member 21 and preferably in a radially side by side position at a short distance from the forming drum 12a, according to a section having length corresponding to that of the strip-like element "B" to be obtained following the subsequent actuation of the cutting member itself. The deposition unit 19 is designed to sequentially engage each of the strip-like elements "B" prepared in the manner described above to determine the application thereof against the deposition surface "S" provided by the forming drum 12a.

The deposition unit 19 comprises at least one pressure roller 23 rotatably supported around a respective axis of rotation Y-Y arranged transversely, preferably perpendicular to the longitudinal development direction of the strip-like element "B". More in particular, in a preferred embodiment, at least two pressure rollers 23 are used, each carried by a movable support element 24 along a guide structure 25 extending preferably in a direction perpendicular to the development of the axes of rotation Y-Y of the pressure rollers 23.

The deposition unit 19 is associated with cross handling devices, not shown as they can be implemented in any convenient manner, for example operating between the guide structure 25 and the support elements 24 for translating the pressure rollers 23 in mutual distancing along the guide structure 25. The cross handling of the pressure rollers 23 preferably takes place between a first operating condition (figure 2), in which they are reciprocally side by side, preferably in the proximity of a transversal symmetry plane "P" of the forming drum 12a and in a symmetrically centred position with respect to the longitudinal centre line of the strip-like element "B", and a second operating condition (not shown), in which they are distanced from the transversal symmetry plane "P". Therefore, the pressure rollers 23 translate according to a longitudinal direction of the strip-like element "B" during the deposition thereof.

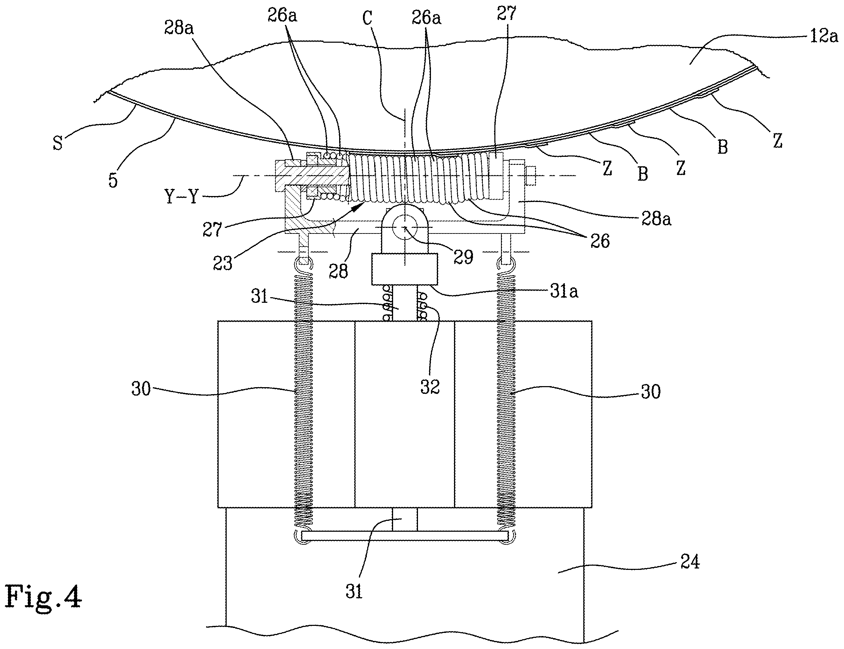

Radial handling devices are also provided, designed to translate the pressure rollers 23 in radial approach to the deposition surface "S" of the forming drum 12a. These radial handling devices are not illustrated or described in detail since they may be implemented in any convenient manner by the man skilled in the art and may for example operate on the guide structure 25 and/or directly on the support elements 24 in order to bring the strip-like element "B" in contact relation on the deposition surface "S". More in particular, on the action of the handling devices, each pressure roller 23 is translatable between a loading condition, in which it is radially distant from the deposition surface "S", as shown in figure 2, and a deposition condition, in which the pressure roller 23 operates against the strip-like element "B" in radial thrust relation, contrasted by the deposition surface "S", as shown in figure 4.

According to the present invention, each pressure roller 23 is elastically deformable. Moreover, each pressure roller 23 is elastically bending deformable along the axis of rotation Y-Y thereof. To this end, the pressure roller 23 may advantageously comprise at least one helical spring 26, preferably of metallic material, having coils 26a consecutively side-by-side along said axis of rotation Y-Y. Preferably, the opposite ends of the helical spring 26 are axially fitted on respective bushes 27, rotatably engaged, coaxially to the axis of rotation Y-Y, with axially opposite end portions 28a of a support bracket 28. Preferably, the support bracket 28 is engaged with the support element 24 by means of a pin 29 arranged in a substantially central position between the respective end portions 28a. The support bracket 28 is therefore angularly oscillating in a substantially radial plane with respect to the forming drum 12a, about a respective oscillation axis defined by pin 29, substantially orthogonal to a lying plane of the axis of rotation Y-Y of the pressure roller 23 and preferably tangent to a circumference concentric to the geometric axis "X-X" of the forming drum 12a. Angular oscillations of the support bracket 28 about the oscillation axis defined by pin 29 correspond to angular oscillations of the axis of rotation "Y-Y" of the pressure roller 23 in a substantially radial plane with respect to the forming drum 12a.

Preferably, two traction springs 30 or equivalent elastic balancing members operate on the support bracket 28, in the vicinity of the mutually opposite end portions 28a, respectively, to maintain the pressure roller 23 according to a predetermined intermediate orientation between two extreme oscillation positions.

Elastic thrust members (31, 32) may be interposed between the support bracket 28 and the support element 24 to promote, in the condition of application, a substantially constant thrust action of the pressure roller 23 against the strip-like element "B" and thus, against the forming drum 12a. More in particular, it may for example be contemplated that the support bracket 28 is carried by a slider 31 slidably guided through the support element 24. A thrust spring 32 optionally preloaded by compression preload operates between the support element 24 and a shoulder 31a carried by slider 31 to push the pressure roller 23 towards the forming drum 12a.

As can be seen in figure 2, in the loading condition, the strip-like element "B" previously cut on the action of the cutting member 21 is preferably placed in contact against the pressure rollers 23 at a certain radial distance from the deposition surface "S".

In order to properly retain the strip-like element "B" in the instants between the cutting of the latter on the action of the cutting member 21 and the application on the forming drum 12a, it may be contemplated that at least one auxiliary retaining member 33 is engaged. Each auxiliary retaining member 33 may for example comprise a plate (or other similar mechanical element) protruding from the respective support element 24 to provide a support seat for the elongated element 20 which is pulled by the gripping member 22 and for the strip-like element "B" cut off.

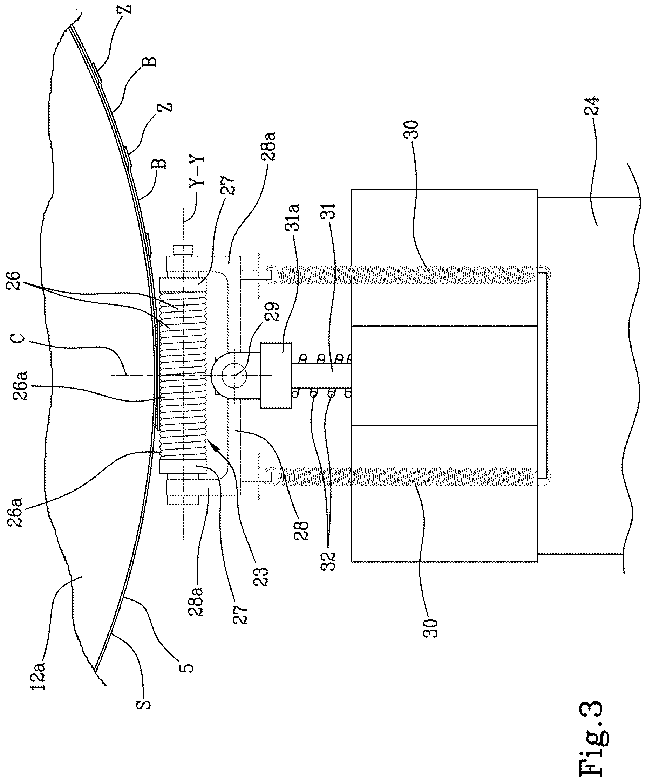

During the radial handling from the loading condition shown in figure 2, each pressure roller 23, before reaching the deposition condition in thrust relation against the deposition surface "S", arrives at a transient condition at the instant in which the initial contact of the strip-like element "B" against the deposition surface "S" takes place, preferably in the vicinity of an axial symmetry plane "C" of the pressure roller 23. In the transient condition, due to the curvature of the deposition surface "S", the respectively opposite longitudinal edges of the strip-like element "B" itself are still spaced by the pressure roller 23 and/or by the deposition surface "S", while the strip-like element "B" arrives tangentially in contact, in the vicinity of a median longitudinal line thereof, with the pressure roller 23 and with the deposition surface "S", as shown in figure 3.

Until the transition condition is reached, the helical spring 26 constituting each of the pressure rollers 23 maintains a rest condition according to a substantially cylindrical configuration, with the respective coils 26a arranged against each other according to the entire circumferential development of the helical spring 26 itself.

Although the pressure roller 23, due to the mutual contact between coils 26a, is substantially non-compressible in the axial direction, i.e. parallel to the axis of rotation "Y-Y" thereof, the helical spring 26 still imparts an elastically deformable structure to the pressure roller 23. More in particular, the features of the helical spring 26 are preferably selected so as to impart to the pressure roller 23 a predetermined flexibility along its axis of rotation "Y-Y".

Preferably, the flexibility is such that the pressure roller 23, due to the radial thrust applied to its ends by the end portions 28a of the support bracket 28, and countered in the axial symmetry plane of the pressure roller itself due to the contact on the deposition surface "S", has a bending deformation camber at least equal to 2^{∗}10⁻⁵ m/N, more preferably at least equal to 5^{∗}10⁻⁵ m/N.

Accordingly, by passing beyond the transient condition to reach the deposition condition, the pressure roller 23 is subjected to an elastic bending deformation along its axis of rotation "Y-Y". Such elastic deformation allows an adaptation of the shape of the pressure roller 23 to that of the deposition surface "S" so as to follow the circumferential and/or transversal curvature thereof progressively, starting from the longitudinal centre line towards the axially opposite ends of the pressure roller itself.

Thus, the application of a uniformly distributed radial thrust action is promoted along the entire development of a contact area between the pressure roller 23 and the strip-like element "B". Said contact area, defined on the outer surface of the pressure roller 23, extends according to a substantially linear development transversely to the strip-like element "B", approximately along a generatrix of the rotation solid represented by the cylindrical configuration of the roller itself. Upon reaching the deposition condition, the pressure roller 23 is thus elastically deformed against the strip-like element "B", taking a radial section profile corresponding to that of the deposition surface "S" at least along the contact area.

The bending deformation of the pressure roller 23 may be promoted by a mutual radial mobility of the single coils 26a of the helical spring 26. The coils 26a in fact are axial portions of the pressure roller 23 elastically movable one with respect to the other also radially to the axis of rotation "Y-Y" of the pressure roller itself, so as to follow any unevenness of the deposition surface "S" due to the presence of diametrical shoulders and/or to the superimposition of the longitudinal edges of circumferentially consecutive strip-like elements "B" in the overlapping zones "Z".

When the deposition condition is reached, the bending deformation of the pressure roller 23 may optionally cause a reciprocal axial displacement of coils 26a in the circumferential areas away from the deposition surface "S", while the same coils 26a remain arranged against each other in the circumferential areas radially in contact with the strip-like element "B" and close to the deposition surface "S", as clearly shown in figure 4.

In other words, the axial development of axial the pressure roller 23, at least along the contact area, remains almost constant, despite the bending deformation of the roller itself.

Preferably, reaching the deposition condition takes place with the pressure rollers 23 mutually approached in the vicinity of the transversal symmetry plane "P" of the drum in the first operating condition. when the deposition condition is reached, a median longitudinal section of the strip-like element "B" carried by the deposition unit 19, extending between the pressure rollers 23 in the first operating condition, is made to adhere against the deposition surface "S". The cross handling devices subsequently cause the mutual distancing of the pressure rollers 23 towards the second operating condition. During this transfer, each of the pressure rollers 23 rolls along the strip-like element "B" travelling thereon in the direction of the respective end, exerting the radial thrust action evenly distributed over the entire development of the strip-like element "B" affected by the passage of the pressure roller 23. The use of the metal helical springs 26 makes each pressure roller 23, while deforming elastically as described above due to the radial thrust, maintain a circular development in cross-section, also at the contact area where the thrust action is concentrated.

In order to prevent wrinkles and/or other structural distortions on the strip-like element "B" due to the rolling of the pressure roller 23 in the points of mutual approach between coils 26a, it is preferable to use helical springs whose coils 26a have each a circular or substantially elliptical cross section profile. However, the use of helical springs with coils 26a having a rectangular or polygonal shape in cross section, optionally with rounded corners, is also contemplated.

The uniformity of the radial thrust action exerted on the surface development of each strip-like element "B" during application, due to the flexibility and geometric adaptability of the pressure rollers 23, ensures an effective air ejection between strip-like element "B" and deposition surface "S", allowing a satisfactory application of the strip-like elements "B" even at high operating speed. In particular, it is possible to eliminate or significantly reduce undesired air bubbles also at structural discontinuities that may occur for example in the overlapping areas "Z", i.e. along the respectively overlapping longitudinal edges of strip-like elements "B" that are circumferentially adjacent.

The Applicant has found that eliminating such air bubbles allows a significant reduction of production waste. For example, with particular reference to the implementation of carcass plies 4, it was in fact found that the present invention achieves a better adhesion of the single strip-like elements "B" against the deposition surface "S". The pressing uniformly exerted through the strip-like elements "B" during the application also tends to eliminate or reduce the surface irregularities that may be present on the deposition surface "S", especially when the latter is defined by liner 5 or other elastomeric component made by coiling, i.e. winding around the forming drum 12a, 12b a continuous elongated element of elastomeric material according to mutually juxtaposed coils, and optionally in partial mutual overlapping to form a substantially continuous layer. The thrust action exerted by the pressure rollers 23 also promotes a compaction of coils 26a that form the component on which the strip-like elements "B" are applied, thus preventing undesired detachments between the same and the consequent structural defects in the final product.

A better surface regularity is also achieved on the entire development of the carcass ply 4 or other component made by the deposition of the strip-like elements "B". This condition results in a further reduction of undesired air bubbles during the formation of further components, such as sidewalls 11 and/or tread band 9, in particular if obtained by coiling.

A significant reduction in production waste is thus achieved, also in relation to tyres with very small H/C section ratio.

Limiting air bubbles between the components of the green tyre 2 further allows significantly speeding up the vulcanisation processes (using higher temperatures), as it is no longer necessary to give the air trapped in the tyre components the time needed to escape from the same under the effect of the moulding pressure prior to cross-linking.

The possibility to subject the carcass structure 3 and the belt structure 8 to a high tension during vulcanisation, for example to achieve particular tyre handling performance, is also promoted.

## Claims

1. Method for building tyres for vehicle wheels, wherein at least one component of a tyre is formed on a forming drum (12a, 12b) by depositing strip-like elements (B) parallel next to one another and arranged one after the other on a deposition surface (S) extending along a circumferential development direction of the forming drum (12a, 12b) in a radially outer position with respect to the latter;
wherein the deposition of each of said strip-like elements (B) takes place with the aid of at least one pressure roller (23) operating in radial thrust relation along a contact area extending transversally on the respective strip-like element (B) arranged against the deposition surface (S),
wherein during the deposition, the pressure roller (23) translates along a longitudinal direction of the strip-like element (B) and is elastically deformed against said strip-like element (B) to take, at least along said contact area, a profile in radial section shaped according to said deposition surface (S), so as to distribute said radial thrust on an entire width of the strip-like element (B),
wherein during the deposition, the pressure roller (23) is angularly pivotable in a substantially radial plane with respect to the forming drum (12a, 12b).

2. Method according to claim 1, wherein before reaching the deposition condition, the pressure roller (23) goes beyond a transient condition in which the strip-like element (B) is at least partly in contact along a median longitudinal line thereof with said pressure roller (23) and said deposition surface (S), while respectively opposite longitudinal edges of the strip-like element (B) are spaced apart from the pressure roller (23) and/or from the deposition surface (S).

3. Method according to one or more of the preceding claims, wherein at least one of said strip-like elements (B) is deposited with a longitudinal edge radially superimposed on the longitudinal edge of a previously deposited strip-like element (B), at an overlapping zone (Z) subjected to the action of the pressure roller (23).

4. Method according to one or more of the preceding claims, wherein the pressure roller (23) has axial portions elastically movable relative to one another radially to the axis of rotation (Y-Y) of the roller.

5. Method according to one or more of the preceding claims, wherein during the deposition, the pressure roller (23) maintains a circular extension in cross section at the contact area.

6. Method according to one or more of the preceding claims, wherein the pressure roller (23) is radially movable with respect to the forming drum (12a, 12b) against the action of elastic thrust members.

7. Apparatus for building tyres for vehicle wheels, comprising:
at least one forming drum (12a, 12b);
at least one assembling device (17) for assembling tyre components on the forming drum (12a, 12b);
wherein said at least one assembling device (17) comprises:
a deposition unit (19) comprising at least one pressure roller (23) for at least one strip-like element (B) to be deposited;
cross handling devices for translating said pressure roller (23) along a longitudinal direction of each strip-like element (B) during the deposition of the same;
radial handling devices for translating said pressure roller (23) between a loading condition, in which the pressure roller (23) is radially away from a deposition surface (S) radially outer with respect to the forming drum (12a, 12b) and a deposition condition, in which said pressure roller (23) exerts a radial thrust opposed by the deposition surface (S) along a contact area externally provided by the pressure roller (23);
wherein the pressure roller (23) is elastically deformable to take, along said contact area in the deposition condition, a profile in radial section shaped according to said deposition surface (S),
wherein the pressure roller (23) is rotatably supported by a support bracket (28) angularly pivotable about an oscillation axis,
wherein angular oscillations of the support bracket (28) about the oscillation axis correspond to angular oscillations of the axis of rotation (Y-Y) of the pressure roller (23) in a substantially radial plane with respect to the forming drum (12a, 12b).

8. Apparatus according to claim 7, wherein the flexibility of the pressure roller (23) along the axis of rotation (Y-Y) thereof is such as to produce bending deformation camber at least equal to 2^{∗}10⁻⁵ m/N.

9. Apparatus according to claim 7 or 8, wherein said pressure roller (23) comprises a helical spring (26) having coils (26a) consecutively side by side along said axis of rotation (Y-Y).

10. Apparatus according to one or more of claims 7 to 9, wherein said oscillation axis is substantially orthogonal to a lying plane of the axis of rotation (Y-Y) of the pressure roller (23).

11. Apparatus according to one or more of claims7 to 10, wherein said oscillation axis is substantially tangent to a circumference concentric to a geometric axis (X-X) of the forming drum (12a, 12b).

12. Apparatus according to one or more of claims 7 to 11, further comprising elastic balancing members operating on the support bracket (28) to maintain the pressure roller (23) in an intermediate orientation between two extreme oscillation positions.

13. Apparatus according to one or more of claims 9 to 12, wherein axially opposite ends of said helical spring (26) are axially fitted on respective bushes (27) rotatably engaged to a support bracket (28).

14. Apparatus according to one or more of claims 7 to 13, wherein the pressure roller (23) is operatively carried by a support element (24) on which said radial handling devices operate.

15. Apparatus according to claim 14, wherein said support bracket (28) is constrained to the support element (24) in a pivotable manner about said oscillation axis.

## Patentansprüche

1. Verfahren zur Fertigung von Reifen für Fahrzeugräder, wobei zumindest eine Komponente eines Reifens an einer Formungstrommel (12a, 12b) gebildet wird, durch Ablegen von streifenförmigen Elementen (B) parallel nebeneinander und der Reihe nach angeordnet an einer Ablageoberfläche (S), die sich entlang einer Umfangserstreckungsrichtung der Formungstrommel (12a, 12b) in einer radial äußeren Position in Bezug auf letztere erstreckt;
wobei das Ablegen eines jeden der streifenförmigen Elemente (B) mit der Hilfe zumindest einer Druckrolle (23) erfolgt, die in einer radialen Schubbeziehung entlang eines Kontaktbereichs arbeitet, der sich quer über das jeweilige streifenförmige Element (B) erstreckt, das gegen die Ablageoberfläche (S) angeordnet ist,
wobei während das Ablegens die Druckrolle (23) sich entlang einer Längsrichtung des streifenförmigen Elements (B) verschiebt und elastisch gegen das streifenförmige Element (B) verformt wird, um zumindest entlang des Kontaktbereichs im radialen Schnitt ein Profil anzunehmen, das gemäß der Ablageoberfläche (S) geformt ist, um den radialen Schub auf die gesamte Breite des streifenförmigen Elements (B) zu verteilen,
wobei während das Ablegens die Druckrolle (23) in einer im Wesentlichen radialen Ebene in Bezug auf die Formungstrommel (12a, 12b) winkelförmig schwenkbar ist.

2. Verfahren nach Anspruch 1, wobei vor Erreichen des Ablagezustands die Druckrolle (23) über einen transienten Zustand, in dem das streifenförmige Element (B) entlang einer Längsmittelline davon zumindest teilweise in Kontakt mit der Druckrolle (23) und der Ablageoberfläche (S) steht, hinausgeht, während jeweils gegenüberliegende Längskanten des streifenförmigen Elements (B) von der Druckrolle (23) und/oder von der Ablageoberfläche (S) beabstandet sind.

3. Verfahren nach einem oder mehreren der vorhergehenden Ansprüche, wobei zumindest eines der streifenförmigen Elemente (B) so abgelegt wird, dass eine Längskante an einer Überlappungszone (Z), die der Wirkung der Druckrolle (23) unterliegt, radial über die Längskante eines zuvor abgelegten streifenförmigen Elements (B) gelegt wird.

4. Verfahren nach einem oder mehreren der vorhergehenden Ansprüche, wobei die Druckrolle (23) axiale Abschnitte aufweist, die in Bezug auf einander radial zu der Drehachse (Y-Y) der Rolle beweglich sind.

5. Verfahren nach einem oder mehreren der vorhergehenden Ansprüche, wobei die Druckrolle (23) während der Ablage eine im Querschnitt kreisförmige Erstreckung an dem Kontaktbereich beibehält.

6. Verfahren nach einem oder mehreren der vorhergehenden Ansprüche, wobei die Druckrolle (23) in Bezug auf die Formungstrommel (12a, 12b) radial gegen die Wirkung von elastischen Schubelementen beweglich ist.

7. Vorrichtung zur Herstellung von Reifen für Fahrzeugräder, wobei die Vorrichtung umfasst:
zumindest eine Formungstrommel (12a, 12b);
zumindest eine Zusammenbaueinrichtung (17) zum Zusammenbauen von Reifenkomponenten an der Formungstrommel (12a, 12b);
wobei die zumindest eine Zusammenbaueinrichtung (17) umfasst:
eine Ablegeeinheit (19) umfassend zumindest eine Druckrolle (23) für zumindest ein abzulegendes streifenförmiges Element (B) ;
Querbetätigungseinrichtungen zum Verschieben der Druckrolle (23) entlang einer Längsrichtung eines jeden streifenförmigen Elements (B) während der Ablage desselben;
Radialbetätigungseinrichtungen zum Verschieben der Druckrolle (23) zwischen einem Ladezustand, in dem sich die Druckrolle (23) radial von einer Ablageoberfläche (S) weg radial außerhalb in Bezug auf die Formungstrommel (12a, 12b) befindet, und einem Ablegezustand, in welchem die Druckrolle (23) einen radialen Schub gegen die Ablageoberfläche (S) entlang eines Kontaktbereichs, der außen von der Druckrolle (23) bereitgestellt wird, ausübt;
wobei die Druckrolle (23) elastisch verformbar ist, um in dem Ablegezustand im radialen Schnitt ein Profil entlang des Kontaktbereichs anzunehmen, das gemäß der Ablageoberfläche (S) geformt ist,
wobei die Druckrolle (23) drehbar durch eine Trägerhalterung (28) gelagert wird, die winkelförmig um eine Oszillationsachse schwenkbar ist,
wobei winkelförmige Oszillationen der Trägerhalterung (28) um die Oszillationsachse winkelförmigen Oszillationen der Drehachse (Y-Y) der Druckrolle (23) in einer im Wesentlichen radialen Ebene in Bezug auf die Formungstrommel (12a, 12b) entsprechen.

8. Vorrichtung nach Anspruch 7, wobei die Flexibilität der Druckrolle (23) entlang der Drehachse (Y-Y) derselben derart ist, das eine Biegeverformungskrümmung zumindest gleich 2*10⁻⁵ m/N produziert wird.

9. Vorrichtung nach Anspruch 7 oder 8, wobei die Druckrolle (23) eine Spiralfeder (26) umfasst, die Windungen (26a) Seite an Seite aufeinander folgend entlang der Drehachse (Y-Y) aufweist.

10. Vorrichtung nach einem oder mehreren der Ansprüche 7 bis 9, wobei die Oszillationsachse im Wesentlichen senkrecht auf eine liegende Ebene der Drehachse (Y-Y) der Druckrolle (23) steht.

11. Vorrichtung nach einem oder mehreren der Ansprüche 7 bis 10, wobei die Oszillationsachse im Wesentlichen tangential zu einem Umfang ist, der konzentrisch mit einer geometrischen Achse (X-X) der Formungstrommel (12a, 12b) ist.

12. Vorrichtung nach einem oder mehreren der Ansprüche 7 bis 11, ferner umfassend elastische Ausgleichselemente, die auf die Trägerhalterung (28) wirken, um die Druckrolle (23) in einer mittleren Orientierung zwischen zwei Extrempositionen der Oszillation zu halten.

13. Vorrichtung nach einem oder mehreren der Ansprüche 9 bis 12, wobei axial gegenüberliegende Enden der Spiralfeder (26) axial an jeweiligen Buchsen (27) befestigt sind, die drehbar mit einer Trägerhalterung (28) in Eingriff stehen.

14. Vorrichtung nach einem oder mehreren der Ansprüche 7 bis 13, wobei die Druckrolle (23) wirkmäßig von einem Trägerelement (24) getragen wird, auf welche die Radialbetätigungseinrichtungen wirken.

15. Vorrichtung nach Anspruch 14, wobei die Trägerhalterung (28) durch das Trägerelement (24) auf um die Oszillationsachse schwenkbare Weise eingeschränkt wird.

## Revendications

1. Procédé de construction de pneus pour roues de véhicule, dans lequel au moins un composant d'un pneu est formé sur un tambour de formation (12a, 12b) en déposant des éléments en forme de bande (B) de manière parallèle les uns à côté des autres et agencés les uns après les autres sur une surface de dépôt (S) s'étendant le long d'une direction de développement circonférentielle du tambour de formation (12a, 12b) dans une position radialement extérieure par rapport à ce dernier ;
dans lequel le dépôt de chacun desdits éléments en forme de bande (B) a lieu à l'aide d'au moins un rouleau de pression (23) agissant en relation de poussée radiale le long d'une zone de contact s'étendant transversalement sur l'élément en forme de bande (B) respectif agencé contre la surface de dépôt (S),
dans lequel, pendant le dépôt, le rouleau de pression (23) effectue une translation le long d'une direction longitudinale de l'élément en forme de bande (B) et est déformé élastiquement contre ledit élément en forme de bande (B) pour prendre, au moins le long de ladite zone de contact, un profil en section radiale formé selon ladite surface de dépôt (S), de manière à répartir ladite poussée radiale sur une largeur totale de l'élément en forme de bande (B),
dans lequel, pendant le dépôt, le rouleau de pression (23) peut pivoter de manière angulaire dans un plan sensiblement radial par rapport au tambour de formation (12a, 12b).

2. Procédé selon la revendication 1, dans lequel avant d'atteindre la condition de dépôt, le rouleau de pression (23) dépasse une condition transitoire dans laquelle l'élément en forme de bande (B) est au moins partiellement en contact le long d'une ligne longitudinale médiane de celui-ci avec ledit le rouleau de pression (23) et ladite surface de dépôt (S), tandis que des bords longitudinaux respectivement opposés de l'élément en forme de bande (B) sont espacés du rouleau de pression (23) et/ou de la surface de dépôt (S).

3. Procédé selon une ou plusieurs des revendications précédentes, dans lequel au moins un desdits éléments en forme de bande (B) est déposé avec un bord longitudinal radialement superposé sur le bord longitudinal d'un élément en forme de bande (B) précédemment déposé, au niveau d'une zone de chevauchement (Z) soumise à l'action du rouleau de pression (23).

4. Procédé selon une ou plusieurs des revendications précédentes, dans lequel le rouleau de pression (23) a des parties axiales mobiles de manière élastique l'une par rapport à l'autre radialement par rapport à l'axe de rotation (Y-Y) du rouleau.

5. Procédé selon une ou plusieurs des revendications précédentes, dans lequel, pendant le dépôt, le rouleau de pression (23) maintient une extension circulaire en coupe transversale au niveau de la zone de contact.

6. Procédé selon une ou plusieurs des revendications précédentes, dans lequel le rouleau de pression (23) est mobile radialement par rapport au tambour de formation (12a, 12b) contre l'action d'organes de poussée élastiques.

7. Appareil de construction de pneus pour roues de véhicules, comprenant :
au moins un tambour de formation (12a, 12b) ;
au moins un dispositif d'assemblage (17) pour assembler des composants de pneu sur le tambour de formation (12a, 12b) ;
dans lequel ledit au moins un dispositif d'assemblage (17) comprend :
une unité de dépôt (19) comprenant au moins un rouleau de pression (23) pour au moins un élément en forme de bande (B) à déposer ;
des dispositifs de manipulation transversale pour translater ledit rouleau de pression (23) le long d'une direction longitudinale de chaque élément en forme de bande (B) pendant le dépôt de celui-ci ;
des dispositifs de manipulation radiale pour translater ledit rouleau de pression (23) entre une condition de chargement, dans laquelle le rouleau de pression (23) est radialement éloigné d'une surface de dépôt (S) radialement extérieure par rapport au tambour de formation (12a, 12b) et une condition de dépôt, dans laquelle ledit rouleau de pression (23) exerce une poussée radiale contrée par la surface de dépôt (S) le long d'une zone de contact fournie extérieurement par le rouleau de pression (23) ;
dans lequel le rouleau de pression (23) est déformable élastiquement pour prendre, le long de ladite zone de contact dans la condition de dépôt, un profil en section radiale formé selon ladite surface de dépôt (S),
dans lequel le rouleau de pression (23) est supporté en rotation par une console de support (28) pivotant angulairement autour d'un axe d'oscillation,
dans lequel les oscillations angulaires de la console de support (28) autour de l'axe d'oscillation correspondent aux oscillations angulaires de l'axe de rotation (Y-Y) du rouleau de pression (23) dans un plan sensiblement radial par rapport au tambour de formation (12a, 12b).

8. Appareil selon la revendication 7, dans lequel la flexibilité du rouleau de pression (23) le long de l'axe de rotation (Y-Y) de celui-ci est telle qu'elle permet de produire une cambrure de déformation en flexion au moins égale à 2*10⁻⁵ m/N.

9. Appareil selon la revendication 7 ou 8, dans lequel ledit rouleau de pression (23) comprend un ressort hélicoïdal (26) ayant des spires (26a) consécutivement côte à côte le long dudit axe de rotation (Y-Y).

10. Appareil selon une ou plusieurs des revendications 7 à 9, dans lequel ledit axe d'oscillation est sensiblement orthogonal à un plan horizontal de l'axe de rotation (Y-Y) du rouleau de pression (23).

11. Appareil selon une ou plusieurs des revendications 7 à 10, dans lequel ledit axe d'oscillation est sensiblement tangent à une circonférence concentrique à un axe géométrique (X-X) du tambour de formation (12a, 12b).

12. Appareil selon une ou plusieurs des revendications 7 à 11, comprenant en outre des organes d'équilibrage élastiques agissant sur la console de support (28) pour maintenir le rouleau de pression (23) dans une orientation intermédiaire entre deux positions d'oscillation extrêmes.

13. Appareil selon une ou plusieurs des revendications 9 à 12, dans lequel les extrémités axialement opposées dudit ressort hélicoïdal (26) sont montées axialement sur des douilles respectives (27) en prise de manière rotative à une console de support (28).

14. Appareil selon une ou plusieurs des revendications 7 à 13, dans lequel le rouleau de pression (23) est porté de manière fonctionnelle par un élément de support (24) sur lequel agissent lesdits dispositifs de manutention radiale.

15. Appareil selon la revendication 14, dans lequel ladite console de support (28) est contrainte à l'élément de support (24) de manière pivotante autour dudit axe d'oscillation.
